# EUROPEAN PATENT APPLICATION

(11) **EP 2 497 946 A1**
(43) Date of publication of application: **12.09.2012**
(21) Application number: 11157466.1
(22) Date of filing: 09.03.2011
(51) Int. Cl.: F03D 7/02, F03D 7/04

(54) **Method and arrangement for detecting a blade pitch angle misalignment of a rotor blade system of a wind turbine**

(71) Applicant: SIEMENS AKTIENGESELLSCHAFT, 80333 München (DE)
(72) Inventor: Frydendal, Ib, 6683, Føvling (DK); Rieper, Johnny, 8700, Horsens (DK)

(57) **Abstract**

It is described a method and an arrangement for detecting a blade pitch angle unbalance of a rotor blade system of a wind turbine, the rotor blade system rotating around a rotor rotation axis, the method comprising: yawing the rotor rotation axis about a yawing axis transverse, in particular perpendicular, to the rotor rotation axis; obtaining a load signal (y) indicative of a load due to the yawing; analyzing the load signal regarding a frequency component (f1) of the load signal; and detecting the blade pitch angle unbalance based on the analyzed load signal.

## Description

### Field of invention

The present invention relates to a method and to an arrangement for detecting a blade pitch angle unbalance of a rotor blade system of a wind turbine in which the rotor blade system rotates around a rotor rotation axis. In particular, the present invention relates to a method and to an arrangement for detecting a blade pitch angle unbalance of a rotor blade system of a wind turbine which may enable to reduce fatigue and unnecessary loads at a wind turbine tower top, a bed frame, a main shaft and at the rotor blades.

### Art Background

A wind turbine may comprise a wind turbine tower, a nacelle mounted on top of the wind turbine tower, wherein the nacelle supports a rotor rotation shaft at which one or more rotor blades are mounted. Further, to orient the rotor blades according to a momentary wind direction, the rotor rotation axis, i.e. the rotor rotation shaft, may be turned around or about a yawing axis which may be transverse, in particular perpendicular to the rotor rotation axis of the rotor rotation shaft, in particular running along a longitudinal axis of the wind turbine tower. In particular, the nacelle harbouring or supporting the rotor rotation shaft may be turned or rotated about the yawing axis relative to the wind turbine tower to orient the rotor blades towards the wind.

In a conventional wind turbine system the pitch angle of the one or more rotor blades connected to the rotor rotation shaft may be set using zero marks of some kind. Further on, the pitch angle may be measured by various methods, e.g. mounting templates of the blade, using optical methods and the like.

It has however been observed that during operation of the wind turbine an aerodynamic unbalance of the wind turbine rotation shaft creates excessive fatigue and extreme loads at the wind turbine top, the bed-frame, the main rotation shaft and the rotor blades. Thereby, the reliability, the durability of the wind turbine may be hampered, in particular reduced.

There may be a need for a method and for an arrangement for detecting a blade pitch angle unbalance of a rotor blade system of a wind turbine, wherein an unbalance of blade pitch angles of rotor blades comprised in the rotor blade system may be detected, in particular detected during operation of the wind turbine. In particular, there may be a need for a method and an arrangement for detecting a blade pitch angle unbalance which are cost-effective, reliable and can be performed in a simple manner without requiring expensive measurement equipment.

### Summary of the Invention

This need may be met by the subject matter according to the independent claims. Advantageous embodiments of the present invention are described by the dependent claims.

According to an embodiment of the present invention, a method for detecting (in particular for identifying the blade pitch angle unbalance, in particular for determining a degree of a blade pitch angle unbalance) a blade pitch angle unbalance (in particular being a situation in which at least two rotor blades comprised in the rotor blade system have different blade pitch angles, wherein the blade pitch angle may define a rotational position of the corresponding rotor blade upon rotation of the rotor blade along a longitudinal axis of the rotor blade) of a rotor blade system (comprising two, three, four, five, six, seven, eight or even more rotor blades which are mounted at a rotor rotation shaft) of a wind turbine, the rotor blade system rotating around a rotor rotation axis, is provided. Thereby, the method comprises yawing (in particular turning or rotating or pivoting) the rotor rotation axis (in particular also the nacelle which supports the rotor rotation shaft rotating around the rotor rotation axis) about a yawing axis transverse, in particular perpendicular, to the rotor rotation axis (such that in particular the yawing axis is not parallel to the rotor rotation axis); obtaining (in particular obtaining an electrical signal; in particular measuring; in particular calculating) a load signal (such as an electrical load signal and/or an optical load signal) indicative of a load (in particular a power or a torque) due to the yawing (in particular the yawing requiring application of a force and/or a torque and/or power in order to effect turning the rotor rotation axis, wherein the load signal may be any signal from which the torque, the force and/or the required energy to effect the turning may be derivable); analyzing (in particular analyzing the load signal with respect to a temporal behavior or with respect to a rotor azimuthal angle, wherein the rotor azimuthal angle describes the angular position of the rotor blade system when rotating around the rotor rotation axis) the load signal (or in particular any value which is derivable from the load signal) regarding a frequency component (in particular a predetermined frequency component, in particular a dynamically determined frequency component) of the load signal (wherein the load signal may be composed of a number of different frequency components, wherein the load signal is in particular analyzed with respect to a particular frequency component, in particular for determining a presence of the frequency component, a magnitude of the frequency component and/or a phase of the frequency component); and detecting the blade pitch angle unbalance based on the analyzed load signal (in particular if the magnitude and/or phase of the frequency component satisfy one or more criteria).

The method may be performed during or after manufacturing the wind turbine, during maintenance of the wind turbine, during monitoring the wind turbine and/or during operation of the wind turbine. In particular, the method may be implemented as a real-time method for detecting the blade pitch angle unbalance based upon which the detected blade pitch angle unbalance may be dynamically reduced, as will be explained below in further detail.

In particular, the method may take advantage of values and/or signals available at a conventional wind turbine system, such as a power signal used to activate the yawing activator and a rotor azimuthal angle signal. In particular, the wind turbine may be yawing to the left and to the right frequently in order to be aligned correctly in relation to the wind direction. During the yaw movement (i.e. rotating the rotor rotation axis about the yawing axis) the power used for driving a yaw activator, such as an electric motor, may be an effective indicator for deriving the load signal. In particular, using the power used for the yaw actuator may be appropriate to detect a rotor blade pitch unbalance indicating that the pitch angle of one or more of the rotor blades mounted at the rotor rotation shaft need to be calibrated.

In particular, a static pitch angle calibration fault of one or more blades may be determined when applying the method. Thereby, a power measurement signal of one or more yaw actuators, e.g. electrical and/or hydraulic actuated motors, a rotor azimuth angle (e.g. obtained by an accelerometer or encoder) and/or a wind speed signal (for example obtained by a measurement using an anemometer) may be used. When the blade pitch angle unbalance, e.g. a calibration fault of the blade pitch angles, is detected by analyzing stored or continuously obtained load signals, the pitch angle may be corrected once and for all or continuously for those blades which have the calibration fault.

Data handling of the load signal may be done in several ways. According to one embodiment the load signal is stored during a plurality of time intervals (which are in particular not adjacent to each other) in which the yawing is effected. In particular, the time intervals during which yawing is effected may span 10 to 30 seconds to give some examples. The obtained load signal may be stored for later processing. In particular, the stored data of the yaw actuator signals, azimuth signals and wind speed signals (and other signals or measurements from a wind turbine) may be accessible by an internet connection, a modem and/or any kind of net connection like e.g. Ethernet or similar connection.

According to another embodiment, the load signal is obtained during operation of the wind turbine (i.e. during production of electric energy and supplying the electric energy to a utility grid). In particular, detecting the blade pitch angle unbalance may be performed continuously, in particular after a sufficient amount of data of the load signal are acquired. In any case, data regarding the load signal may be stored for later processing. In particular, it may be required to acquire a load signal over a whole revolution (or even several revolutions) of the rotor blade system, i.e. over the rotor azimuth angles from 0° to 360°.

According to an embodiment, the analyzing the load signal comprises determining a magnitude of the frequency component. In particular, the magnitude of the frequency component may indicate a weight of this frequency component in particular compared to one or more weights of other frequency components comprised in the load signal. In particular, the magnitude may also be referred to as an amplitude of the frequency component. In particular, when decomposing the load signal into a series or an integral of plural frequency components, each of the plural frequency components may be characterized by an amplitude and a phase. By determining the amplitude or magnitude of the frequency component the blade pitch angle unbalance may easily be detected. Thereby, the method may be simplified and may be easily performed.

According to an embodiment of the invention the obtaining the load signal comprises obtaining the load signal for a plurality of time points. In particular, the load signal may be sampled at the plurality of time points which may be spaced apart by a constant time interval. Further, obtaining the load signal may comprise filtering, averaging or processing the load signal in order to reduce errors in the load signal. Further, a low pass filtering, or/and bandpass filtering may be applied to the load signal. Thereby, the method for detecting the blade pitch angle unbalance may be improved. In particular, the load signal may be acquired for the plurality of time points such that one or more complete revolutions of the rotor blade system are covered.

According to an embodiment of the invention, the method for detecting the blade pitch angle unbalance further comprises obtaining a rotor azimuthal signal indicative of an azimuthal angle of the rotor blade system (indicating an angular position of the rotor blade system, i.e. an amount by which the rotor blade system rotates around the rotor rotation axis) of the rotor blade system, wherein the detecting the blade pitch unbalance is further based on the rotor azimuthal signal.

In particular, the load signal obtained at a particular point in time may be associated with the rotor azimuthal signal obtained at the same time point. In particular, the rotor azimuthal signal may be obtained for the plurality of time points for which also the load signal has been obtained. Further, the load signal obtained at the plural time points may be associated with the rotor azimuthal signal obtained at the corresponding plural time points. Thus, the load signal may be obtained in dependence of the rotor azimuthal signal. In particular, each load signal obtained at a particular point in time may be associated to a particular azimuthal angle obtained at the same point in time. Thereby, the analyzing the load signal and the detecting the blade pitch angle unbalance may be simplified.

According to an embodiment of the invention, the frequency component corresponds to a rotation frequency of the rotor blade system. In particular, the rotation frequency of the rotor blade system and thus also the frequency of the frequency component may change over time, e.g. due to changing wind speed. If for example the rotation frequency of the rotor blade system is 0.25 Hz, the load signal may be analyzed regarding a magnitude and/or a phase of a frequency component having a frequency of 0.25 Hz. Other frequency components may be disregarded for the detection method according to an embodiment.

According to an embodiment of the invention, the analyzing further comprises determining a further magnitude of a further frequency component (having a frequency different from the frequency of the frequency component) corresponding to the rotation frequency multiplied by a number of rotor blades comprised in the rotor blade system. For example, the frequency of the further frequency component may be 0.75 Hz, if the frequency of the frequency component or the rotation frequency of the rotor blade system is 0.25 Hz and the number of rotor blades is three. In particular, the number of rotor blades comprised in the rotor blade system may be two, three, four, five, six, seven or even higher. According to an embodiment, the load signal is analyzed regarding the frequency component and the further frequency component, but other frequency components may be disregarded. Thereby, the method may be simplified and accelerated.

According to an embodiment, the method for detecting the blade pitch angle unbalance comprises comparing the magnitude with a threshold and/or comparing the further magnitude with a further threshold and/or comparing a difference of the magnitude and the further magnitude with a difference threshold and/or comparing a ratio of the magnitude and the further magnitude with a ratio threshold. In particular, the difference of the magnitude and the further magnitude may be obtained by subtracting the further magnitude from the magnitude. In particular, a ratio of the magnitude and the further magnitude may be obtained by dividing the magnitude by the further magnitude. Comparing the values with corresponding thresholds may simplify the method.

According to an embodiment of the invention, the blade pitch unbalance is detected, if the magnitude exceeds the threshold and/or the further magnitude falls below the further threshold and/or the difference of the magnitude and the further magnitude exceeds the difference threshold and/or the ratio of the magnitude and the further magnitude exceeds the ratio threshold.

According to other embodiments, other criteria may be applied to determine if there is a blade pitch angle unbalance.

According to an embodiment, the detecting is further based on a wind speed (which may be for example measured) causing the rotation of the rotor blade system. Thereby, the method may further be improved.

In particular, when a magnitude or an amplitude of the frequency component corresponding to the rotation frequency of the rotor blade system is particularly high, in particular higher than a threshold it may indicate that there is indeed a blade pitch angle unbalance. In contrast, when the magnitude or the amplitude of the frequency component corresponding to the rotation frequency of the rotor blade system is relatively small, in particular smaller than another threshold, it may indicate that there is no or only a small blade pitch angle unbalance. Further, the larger the magnitude or amplitude of the further frequency component is compared to the magnitude or amplitude of the frequency component the better the blade pitch angles may be balanced.

According to an embodiment, the method comprises in the analyzing step to calculate a Fourier Transformation (in particular using a Fast Fourier Transform FFT) of the load signal with respect to time (wherein the load signal is described depending on the time but) and/or performing a binning of the load signal with respect to the rotor azimuthal angle in a plurality of rotor azimuthal angle bins (such as bins spanning an angle range of 10°, 20°, 30° or 45°, to mention some exemplary embodiments). In particular, the binning method may be applicable, when the yawing is performed only across a limited angle range and obtained within a limited time span such as 10 seconds to 40 seconds, where calculation of a Fourier transformation may not be performed in an accurate manner.

According to an embodiment, the analyzing the load signal further comprises determining a rotor azimuthal phase of the frequency component (in particular comprising fitting a sine or cosine function to the load signal described with respect to the rotor azimuthal angle), wherein the detecting the blade pitch angle unbalance in particular further comprises identifying at least one rotor blade comprised in the rotor blade system based on the determined rotor azimuthal phase, wherein the at least one rotor blade has a blade pitch angle different from at least one other rotor blade comprised in the rotor blade system.

The rotor azimuthal phase of the frequency component may indicate a position of the fitted sine or cosine function. In particular, using the rotor azimuthal phase of the frequency component the rotor blade having a largest difference of its blade pitch angle with respect to the blade pitch angles of the other rotor blades may be identified. Further, based on the magnitude and/or the phase of the frequency component and/or the further frequency component a sign and/or a magnitude of a deviation of the blade pitch angle of the identified rotor blade relative to the blade pitch angles of the other rotor blades may be determined or calculated. Thereby, reducing the blade pitch angle unbalance may be simplified.

According to an embodiment of the invention, the obtaining the load signal comprises obtaining a power consumed by a yawing actuator actuating the yawing and/or obtaining a momentum of a torque of the yawing. Thereby, the load signal may be obtained in a simple manner without providing any additional equipment.

According to an embodiment, a method for reducing a blade pitch angle unbalance of a rotor blade system of a wind turbine is provided, wherein the rotor blade system rotates around a rotor rotation axis. Thereby, the method comprises detecting the blade pitch angle unbalance according to an embodiment of a system for detecting a blade pitch angle unbalance as described above and changing a blade pitch angle of at least one rotor blade comprised in the rotor blade system based on the detected blade pitch angle unbalance, in order to reduce the detected blade pitch angle unbalance.

The changing the blade pitch angle may be performed manually or automatically, during installation, configuring, maintaining and/or operating the wind turbine. A kind of changing of the blade pitch angle of the at least one rotor blade may be obtained by the analysis results of the load signal, in particular by taking into account amplitude and/or phase of the frequency component and/or the further frequency component. Further, the changing the blade pitch angle may be performed in an iterative manner, wherein upon detection of the blade pitch angle unbalance a first offset is applied to the blade pitch angle after which the blade pitch angle unbalance is again detected. Thereupon, a second blade pitch angle offset may be applied, the blade pitch angle unbalance may again be detected until no blade pitch angle unbalance is detected any more. Further, a direction and/or an amount of the changing of the blade pitch angle may be learned from training data comprising a data set of the load signal and a data set of blade pitch angle offsets applied upon detecting the blade pitch angle unbalance.

The method for reducing the blade pitch angle unbalance may increase the life expectancy, durability and reliability of the wind turbine. Further, production efficiency may be improved.

It should be understood that any features (individually or in any combination) disclosed, described, applied, employed for a method for detecting a blade pitch angle unbalance or for a method for reducing a blade pitch angle unbalance may also be applied (individually or in any combination) to an arrangement for detecting a blade pitch angle unbalance and vice versa.

According to an embodiment, it is provided an arrangement for detecting a blade pitch angle unbalance of a rotor blade system of a wind turbine, the rotor blade system rotating around a rotor rotation axis, the arrangement comprising an input terminal for obtaining a load signal indicative of a load due to yawing the rotor rotation axis about a yawing axis transverse, in particular perpendicular, to the rotor rotation axis; a processor configured to analyze the load signal regarding a frequency component of the load signal and to detect the blade pitch angle unbalance based on the analyzed load signal.

In particular, the arrangement for detecting a blade pitch angle unbalance may be adapted to perform a method for detecting a blade pitch angle unbalance as described above.

In particular, the data handling of the load signal and any other signal used in the method may be done offline or may be done directly by the arrangement for detecting the blade pitch angle unbalance, in particular a controller or computer of a wind turbine. In particular, the method for detecting the blade pitch angle unbalance may be implemented in a computer program which is being executed in a controller of the wind turbine. The program may be running continuously or may be running in intervals, e.g. in a certain start-up period of the wind turbine after it has been installed using the necessary stored signal (yaw power, rotor azimuthal angle, wind speed). The controller or computer of the wind turbine may then report a status and/or an alarm locally and/or to a central turbine monitoring system. A service technician may then if necessary due to the report and/or alarm, check the pitch calibration of the one or more rotor blades in connection with a service of the wind turbine.

During the yaw movement (i.e. the turning the rotor rotation axis), the yaw actuator power consumption may fluctuate as a function of the yaw load as the controller controlling the yaw actuator tries to achieve a constant yaw speed. In particular, the power consumption may be used as a load signal indicative of the load due to the yawing.

If the pitch angles of all rotor blades comprised in the rotor blade system of the wind turbine are properly calculated, the yaw actuator signal (which may represent the load signal) will be dominated by 3P content (representing a further frequency component corresponding to three times the rotation frequency of the rotor blade system, when three rotor blades are connected to the rotor rotation shaft), whereas a pitch unbalance will increase the 1P content (representing a magnitude of the frequency component of the load signal corresponding to the rotational frequency of the rotor blade system). A clear representation of the yaw load may require a certain amount of wind speed. The yaw actuator signal may be segmented according to comparable wind speed during yaw sequences. The selected sequences are stored until a sufficient amount of data of the load signal is gathered. The required data for post-processing may comprise the yaw actuator signal (representing the load signal), wind speed, and the azimuthal angle of the rotor plane (representing the rotor azimuthal signal). Either by post-processing or continuously, the 1P and 3P content may be determined by FFT methods or by a binning method as will be described below.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings. The invention is not limited to the described or illustrated embodiments.

### Brief Description of the Drawings

Fig. 1 illustrates graphs considered in a method for detecting a blade pitch angle unbalance according to an embodiment;
Fig. 2 illustrates graphs considered in a method for detecting a blade pitch angle unbalance according to an embodiment;
Fig. 3 illustrates a graph showing frequency components of a load signal obtained according to a method for detecting a blade pitch angle unbalance according to an embodiment;
Fig. 4 illustrates a graph showing frequency components of a load signal obtained according to a method for detecting a blade pitch angle unbalance according to an embodiment;
Fig. 5 illustrates a graph of a load signal in dependence of a rotor azimuthal angle obtained when performing a method for detecting a blade pitch angle unbalance according to an embodiment; and
Fig. 6 illustrates a graph of a load signal in dependence of a rotor azimuthal angle obtained when performing a method for detecting a blade pitch angle unbalance according to an embodiment.

### Detailed Description

The illustration in the drawings is in schematic form. It is noted that in different figures, similar or identical elements are provided with the same reference signs or with reference signs, which are different from the corresponding reference signs only within the first digit.

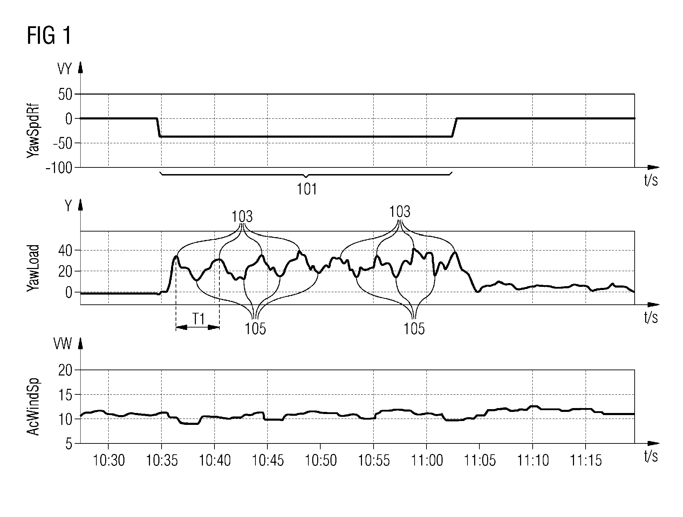

Figure 1 shows measurements from a 2.3MW (nominal electric output power) wind turbine having three rotor blades with a pitch unbalance of 1 deg (the actual pitch angle offsets were 0.0deg, 0.7deg, and 1.0deg respectively for the three blades; hence largest difference 1deg = the pitch unbalance).

Fig. 1 illustrates an upper graph, a middle graph and a lower graph showing on their abscissa the time t in seconds (s) (the time axes in the figures are in mm:ss) relating to a wind turbine having three rotor blades mounted at a rotation shaft.

The upper graph illustrates on its ordinate the yaw speed vy being the (rotational) speed of the turning of the rotor rotation axis about the vertical axis perpendicular to the rotor rotation axis. As can be taken from the upper graph of Fig. 1, the yaw speed is 0 in a time interval from the starting point up to the time 10 minutes and 35 seconds. In a time interval 101 from 10 minutes 35 seconds to about 11 minutes 3 seconds the yaw speed is at about -40 indicating a particular rotational speed and direction of the turning of the rotor rotation axis.

During this time interval 101 a load signal y is acquired which is shown in the middle graph of Fig. 1, wherein on the ordinate the yaw load y is indicated. As can be seen from the middle graph of Fig. 1 the yaw load y fluctuates having peaks 103 and valleys 105. Thereby, the peaks 103 and valleys 105 have a particular periodicity T1 which amounts to about 4 seconds. In particular, a rotation period of rotating the rotor blade system one full revolution also corresponds to the time period T1. Thus, the yaw load illustrated in the middle graph of Fig. 1 fluctuates with a frequency corresponding mainly to the frequency of the rotor rotation. This pattern of the yaw load as depicted in the middle graph of Fig. 1 indicates that there is a blade pitch angle unbalance of the rotor blade system comprising the three rotor blades.

The lower graph in Fig. 1 illustrates on its ordinate the active wind speed vw showing that the wind speed does not change significantly during the time interval 101 during which the yaw load data illustrated in the middle graph are acquired.

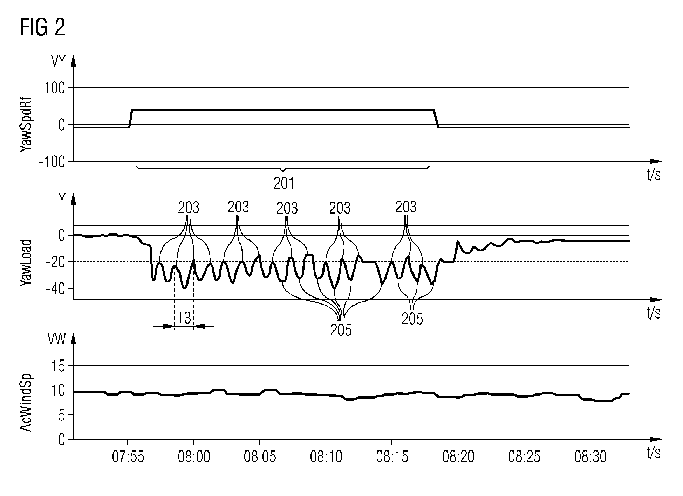

Figure 2 shows the corresponding signal y after the rotor has been aerodynamically balanced to equal pitch angles on all blades.

After having detected the blade pitch angle unbalance based on the yaw load signal y depicted in the middle graph of Fig. 1 one or more rotor blades comprised in the rotor blade system are identified and their blade angles are adjusted. After that a further measurement is performed as is illustrated in Fig. 2. In particular, the rotor rotation axis is turned about the vertical axis during a time interval 201 in which the yaw speed, as illustrated in the upper graph of Fig. 2, is larger than zero. During the time interval 201 a load signal y, in particular the yaw load is acquired, wherein the yaw load is shown in the middle graph of Fig. 2. As can be taken from the middle graph of Fig. 2, the yaw load fluctuates having a particular repetition period of a length T3 being a third of the repetition period T1 as determined from the middle graph of Fig. 1. Thus, after the adaptation of the blade pitch angles the yaw load fluctuate with a frequency which is three times as high as the frequency with which the yaw load fluctuated before the correction of the blade pitch angles. Further, the frequency component having a repetition period of T1 has a reduced amplitude in the yaw load depicted in the middle graph of Fig. 2. This indicates, that a blade pitch angle unbalance has been reduced compared to the situation in Fig. 1.

Comparing Figure 1 and Figure 2 it is observed a) that the yaw signal y reflects the 1P and 3P moment in the yaw moment, and b) that the 1P content of the signal in Figure 1 is easily seen without postprocessing.

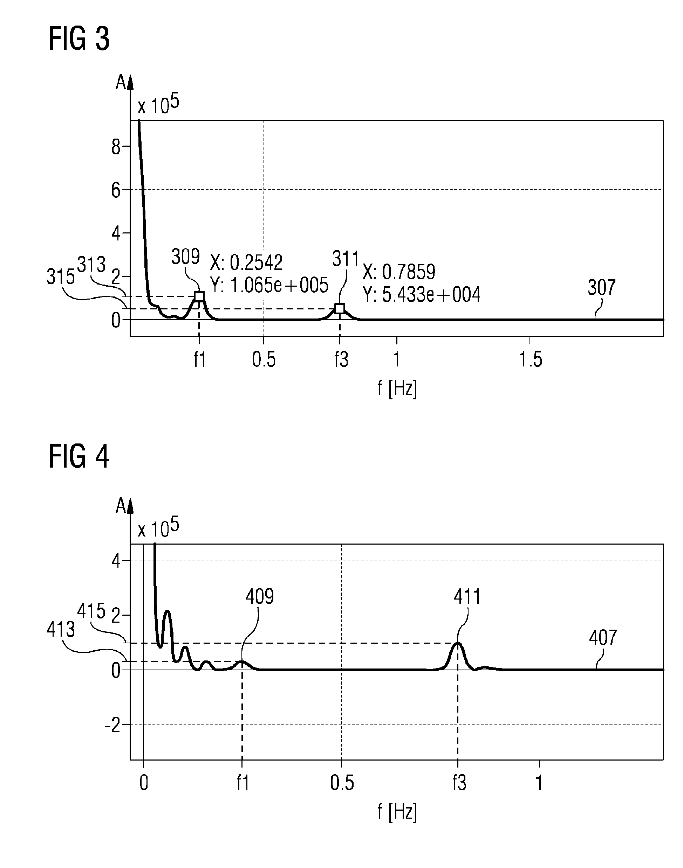

FFT's of the before and after measurements are shown in Figure 3 and Figure 4, respectively.

Fig. 3 illustrates a graph showing on its abscissa a frequency f in Hertz and on its ordinate an amplitude A of frequency components comprised in the yaw load y depicted in the middle graph of Fig. 1. In particular, Fig. 3 illustrates a spectrum 307 of frequency components comprised in the yaw load signal y depicted in the middle graph of Fig. 1. The spectrum 307 comprises a peak 309 at about 0.25 Hz and a lower peak 311 at a frequency of about 0.75 Hz. The height 313 of the peak 309 represents an amplitude of the frequency component having the repetition period T1 and having a frequency f1. The frequency f1 corresponds to the rotor rotation frequency of the rotor blade system. The height 315 of the peak 311 represents an amplitude of the frequency component having a repetition period of T3 corresponding to a frequency f3. In particular, the frequency f3 is three times the frequency f1. Since the height 313 of the frequency component corresponding to the frequency f1 is higher than the amplitude 315 of the frequency component corresponding to the frequency f3, a blade pitch angle unbalance is indicated.

Fig. 4 illustrates the spectrum 407 of the yaw load y depicted in the middle graph of Fig. 2, i.e. the spectrum after correction of the blade pitch angles. The spectrum 407 comprises a peak 409 corresponding to the frequency f1 and a much higher peak 411 corresponding to the frequency f3. The low height 413 of the peak 409 and/or the high height 415 of the peak 411 indicate that the blade pitch angle unbalance is reduced compared to the situation depicted in Fig. 3.

Thus, the efficiency of the method for detecting the blade pitch angle unbalance and the method for reducing the blade pitch angle unbalance is evident.

It is seen clearly that the 1P (0.25Hz) level is significantly larger in Figure 3 than in Figure 4, where the pitch unbalance is present, whereas the 3P (0.78Hz) level is dominating and the 1P level almost absent after the pitch unbalance has been corrected.

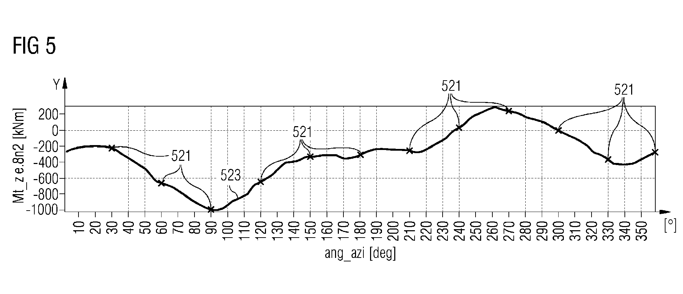

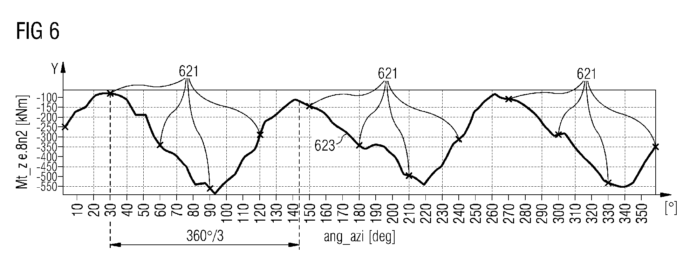

In the graphs shown in Figs. 5 and 6 an abscissa depicts the rotor azimuthal angle ϕ in degrees and the ordinate depicts the yaw load signal y before and after correction of the blade pitch unbalance, respectively.

An alternative to using FFT is binning (and averaging inside each bin) the yaw signal with the azimuth angle. Figure 5 below shows the result (simulated data at 13m/s) with a pitch unbalance of 1deg, and figure 6 shows the corresponding binned curve after the pitch has been corrected.

These 2 curves are very easily analyzed for 1P content and 3P content. The 1P content reveals very clearly the pitch unbalance.

Figure 5 and Figure 6 are based on identical wind input; the only difference is that the turbine model for Figure 5 has a pitch unbalance of 1deg. It is observed that correcting the pitch unbalance (Figure 6) reduces the load cycle range from approx. 1200 kNm to approx. 500 kNm. Assuming a Wohler exponent of 3.5, the consumed life time of the yaw structural components is reduced to approx. 14%.

Fig. 5 illustrates the yaw load signal y depicted in the middle graph of Fig. 1 after binning into bins spanning a rotor azimuthal angle range of 30°, wherein on the abscissa the azimuthal angle ϕ is indicated. In particular, after binning the points 521 are obtained through which a curve was fit. As can be appreciated from the shape of the curve 523 a sine function having a period of 360° may be fitted to the curve 523. Thus, the variation frequency of the yaw load y indicated in the middle graph of Fig. 1 corresponds to the variation frequency of the azimuthal angle ϕ.

Fig. 6 illustrates a graph 623 obtained after correction of the blade pitch unbalance and after binning the yaw load signal y depicted in the middle graph of Fig. 2 in an analogous way as performed for obtaining the graph of Fig. 5. As can be seen in Fig 6, the load signal y fluctuates with a periodicity of 120° indicating that the load signal y varies three times faster than the curve 523 illustrated in Fig. 5. Thus, after correcting the blade pitch angle unbalance the resulting curve 623 illustrated in Fig. 6 indicates that the blade pitch angle unbalance has been reduced.

In particular, in Figs. 5 and 6 the yaw actuator signal y is divided into azimuth bins of 0 - 30, 30 - 60, 60 - 90, ... , 330 - 360 degrees, after which the average of each bin is calculated. Then the average of all bins is subtracted from the individual bin averages, thus eliminating the bias or DC content. The amplitude of the binned yaw actuator signals y is then determined as the square root of two times the standard deviation of all bins. The sum of squares between the binned yaw actuator signal and a sine based on the estimated amplitude, 1P frequency, and a phase offset value is calculated. This is done for phase offset values of 0, 90, 180, 270 degrees. The four summations are then used to determine the yaw moment in the x,y directions of the rotorplane. When the x,y components of the yaw load are determined, the phase and magnitude of the yaw load component is determined using trigonometry.

By this result the embodiments of the invention have established the amount of 1P content and thereby an indication of the pitch unbalance. Using this post processing method, each turbine containing a yaw actuator signal, wind measuring device, and azimuth signal, may be classified into groups of correctly or incorrectly calibrated pitch angles. It is not possible to determine the individual pitch angles from the yaw load component, however, it is possible to determine a new set of pitch angles to obtain a compensating or neutralizing yaw load component and reestablish a pitch balance in the rotor plane.

The phase and magnitude of 3P yaw loads can be determined in a similar manner and the sine fitting as described above can be optimized by several methods to improve the estimate.

Embodiments of the invention enable to classify turbines into groups with and without pitch unbalance automatically using stored data already available and thereby reducing the cost of manual inspection of the pitch unbalance. By an embodiment of the invention a detected pitch unbalance may directly be corrected by pitching one or more of the blades to a pitch angle position where the detected pitch unbalance disappears

Further, alternate solutions are provided:
- After the detection of a pitch unbalance of a wind turbine the pitch angle of each blade may be manually calibrated by a service technician.
- The wind speed signal may be used to pick out the yaw periods where the wind speed is comparable and not too low, e.g. within 10-12 m/s or within 8-10 m/s (typically a wind speed larger than or equal to 5 m/s within an interval of e.g. + 2 m/s or similar). This may be necessary due to the fact that the yaw moment may not be very clear and useable for measurements at low wind speeds (due to friction of the yaw system and similar matter that are not easy to measure and compensate for).
- A yaw speed reference signal may be used for segmentation to point out specific time periods where the yaw system of a wind turbine is active.

Alternative solutions include:
The detection algorithm may be FFT or azimuth binning or other similar methods.
The yaw signal may be obtained from other sources than the yaw actuator power. The signal just have to be a proxy for the yaw moment.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for detecting a blade pitch angle unbalance of a rotor blade system of a wind turbine, the rotor blade system rotating around a rotor rotation axis, the method comprising:
● yawing the rotor rotation axis about a yawing axis transverse, in particular perpendicular, to the rotor rotation axis;
● obtaining a load signal (y) indicative of a load due to the yawing;
● analyzing the load signal regarding a frequency component (f1) of the load signal; and
● detecting the blade pitch angle unbalance based on the analyzed load signal.

2. Method according to claim 1, wherein the analyzing the load signal comprising determining a magnitude (313, 413) of the frequency component (f1).

3. Method according to claim 1 or 2, wherein the obtaining the load signal (y) comprises obtaining the load signal for a plurality of time points (101, 105).

4. Method according to claim 3, further comprising:
● obtaining a rotor azimuthal signal indicative of an azimuthal angle (ϕ) of the rotor blade system, wherein the detecting the blade pitch unbalance is further based on the rotor azimuthal signal.

5. Method according to claim 4, obtaining the rotor azimuthal signal comprises obtaining the rotor azimuthal signal for the plurality of time points (101, 201).

6. Method according to one of the preceding claims, wherein the frequency component corresponds to a rotation frequency (f1) of the rotor blade system.

7. Method according to one of claims 2 to 6, wherein the analyzing further comprises determining a further magnitude (315,415) of a further frequency component (f3) corresponding to the rotation frequency multiplied by a number of rotor blades comprised in the rotor blade system.

8. Method according to one of the preceding claims, wherein the detecting comprises comparing the magnitude with a threshold and/or comparing the further magnitude with a further threshold and/or comparing a difference of the magnitude and the further magnitude with a difference threshold and/or comparing a ratio of the magnitude and the further magnitude with a ratio threshold.

9. Method according to claim 8, wherein the blade pitch unbalance is detected, if the magnitude exceeds the threshold and/or the further magnitude falls below the further threshold and/or the difference of the magnitude and the further magnitude exceeds the difference threshold and/or the ratio of the magnitude and the further magnitude exceeds the ratio threshold.

10. Method according to one of the preceding claims, wherein the detecting is further based on a wind speed (vw) causing the rotation of the rotor blade system.

11. Method according to one of the preceding claims, wherein the analyzing further comprises calculating a Fourier Transformation of the load signal (y) with respect to a time (t) and/or performing a binning of the load signal (y) with respect to the rotor azimuthal angle (ϕ) , in a plurality of rotor azimuthal angle bins.

12. Method according to one of the preceding claims, wherein the analyzing further comprises determining a rotor azimuthal phase of the frequency component (309, f1) ,
wherein the detecting the blade pitch angle unbalance in particular further comprises identifying at least one rotor blade comprised in the rotor blade system based on the determined rotor azimuthal phase, wherein the at least one rotor blade has a blade pitch angle different from at least one other rotor blade comprised in the rotor blade system.

13. Method according to one of the preceding claims, wherein the obtaining the load signal (y) comprises obtaining a power consumed by a yawing actuator actuating the yawing and/or obtaining a momentum of a torque of the yawing.

14. Method for reducing a blade pitch angle unbalance of a rotor blade system of a wind turbine, the rotor blade system rotating around a rotor rotation axis, the method comprising:
● detecting the blade pitch angle unbalance according to the method according to one of the preceding claims; and
● changing a blade pitch angle of at least one rotor blade comprised in the rotor blade system based on the detected blade pitch angle unbalance in order to reduce the detected blade pitch angle unbalance.

15. Arrangement for detecting a blade pitch angle unbalance of a rotor blade system of a wind turbine, the rotor blade system rotating around a rotor rotation axis, the arrangement comprising:
● an input terminal for obtaining a load signal (y) indicative of a load due to yawing the rotor rotation axis about a yawing axis transverse, in particular perpendicular, to the rotor rotation axis;
● a processor configured to
o analyze the load signal regarding a frequency component (f1) of the load signal (y); and
o detect the blade pitch angle unbalance based on the analyzed load signal.
